# EUROPEAN PATENT SPECIFICATION

(11) **EP 4 266 278 B1**
(45) Date of publication and mention of the grant of the patent: **27.08.2025**
(21) Application number: 23162066.7
(22) Date of filing: 15.03.2023
(51) Int. Cl.: G08B 5/00, G08B 21/02, G08B 25/01, G08B 21/04

(54) **IN-VEHICLE OCCUPANT MONITORING AND CALMING SYSTEM**
SYSTEM ZUR ÜBERWACHUNG UND BERUHIGUNG VON FAHRZEUGINSASSEN
SYSTÈME DE SURVEILLANCE ET DE CALME D'OCCUPANT DANS UN VÉHICULE

(30) Priority: 20.04.2022 US 202263363291 P; 03.06.2022 US 202217805435
(43) Date of publication of application: 25.10.2023
(73) Proprietor: Aptiv Technologies AG, 8200 Schaffhausen (CH)
(72) Inventor: Ai, Shiwen, Shelby Township, MI 48317 (US); Welk, Douglas L., Rossville, IN 46065 (US)
(74) Representative: Manitz Finsterwald Patent- und Rechtsanwaltspartnerschaft mbB

(56) References cited:
- KR-A- 20160 089 200
- KR-B1- 101 241 861
- US-B1- 6 696 943

## Description

### FIELD

The present disclosure relates to a method and system of in-vehicle occupant monitoring and calming.

### BACKGROUND

Modern automotive vehicles can include cabin monitoring systems to detect and classify in-vehicle occupants. These systems can include one or more components, including cameras, radar sensors, microphones, speakers, and/or display consoles. Although these systems can display a rear-seat occupant (e.g., a baby in a car seat) on a console display in response to driver input, a driver may still be distracted as they try to determine whether the occupant is distressed or as they soothe a fussy child.

KR 2016 0089200 A discloses a vehicle display device and system for monitoring a rear seat occupant. The system is configured to apply a facial expression recognition algorithm to the image of the face of the rear seat occupant, and to notify the driver of a change of facial expression. For example, when a child is riding in the rear seat of the vehicle, detection of the child crying will result in a notification being displayed to the driver along with live video of the child.
KR 101 241 861 B1 discloses a system for monitoring a rear seat passenger. The system includes motion and sound intensity detectors for monitoring the rear seat passenger. When motion of the passenger and/or sound generated by the passenger is above a predetermined threshold, the system displays live video of the passenger to the driver so the driver can monitor the passenger.

### SUMMARY

The invention is defined by the independent claims. This document describes one or more aspects of an in-vehicle occupant monitoring and calming system. In one example, the system includes a processor that receives occupant data from occupancy-monitoring sensors (e.g., microphones, cameras, radar sensors, ultrasonic sensors) of a vehicle. Based on the occupant data, the processor can determine whether the occupant is distressed and provide an image or video of the occupant to the driver. The processor also displays driver-selectable options to calm the distressed occupant. The options can include playing an audio or video file for the occupant, adjusting the ambient lighting of the vehicle, or rocking or gently vibrating the occupant's seat. In this way, the described system can monitor vehicle occupants and automatically display a video of the distressed occupant to the driver. In addition, the driver can calm the distressed occupant without removing their attention from driving.

This document also describes methods performed by the above-summarized system and other configurations of the system set forth herein and means for performing these methods.

This Summary introduces simplified concepts related to an in-vehicle occupant monitoring and calming system, which are further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of an in-vehicle occupant monitoring and calming system are described in this document with reference to the following drawings. The same numbers are used throughout the drawings to reference like features and components:
FIG. 1 illustrates an example environment in which an in-vehicle occupant monitoring and calming system can be implemented;
FIG. 2 illustrates an example configuration of a vehicle with an in-vehicle occupant monitoring and calming system;
FIG. 3 illustrates an example conceptual diagram to perform in-vehicle occupant monitoring and calming;
FIG. 4 illustrates an example method of in-vehicle monitoring and calming; and
FIG. 5 illustrates an example of a display of an in-vehicle monitoring and calming system.

### DETAILED DESCRIPTION

### OVERVIEW

As described above, some modem vehicles include cabin monitoring systems to detect in-vehicle occupants. These systems can include one or more components, including cameras, radar sensors, microphones, speakers, and/or display consoles. Although these systems can display a rear-seat occupant (e.g., a baby in a car seat), a driver may still be distracted as they try to determine whether the occupant is distressed (e.g., a fussy child) or as they try to soothe the occupant.

The techniques of this disclosure relate to an in-vehicle occupant monitoring and calming system. An example system can include a processor that receives occupant data from occupancy-monitoring sensors of a vehicle. The occupancy-monitoring sensors can include audio sensors that detect sounds made by an occupant, cameras that track the movement of the occupant, and other sensors that monitor the occupant's biometric data. Based on the occupant data, the processor can determine whether the occupant is distressed and provide an image or video of the occupant to the driver. The processor also displays driver-selectable options to calm the distressed occupant. The options can include playing an audio or video file for the occupant, adjusting the ambient lighting of the vehicle, or rocking or gently vibrating the occupant's seat. In this way, the described system can monitor vehicle occupants and automatically display an image or video of the distressed occupant to the driver without requiring the driver to request the image or video. In addition, the driver can soothe the distressed occupant without removing their attention from the operation of the vehicle.

This is just one example of the described in-vehicle occupant monitoring and calming system. This document describes other examples and implementations.

### EXAMPLE SYSTEM

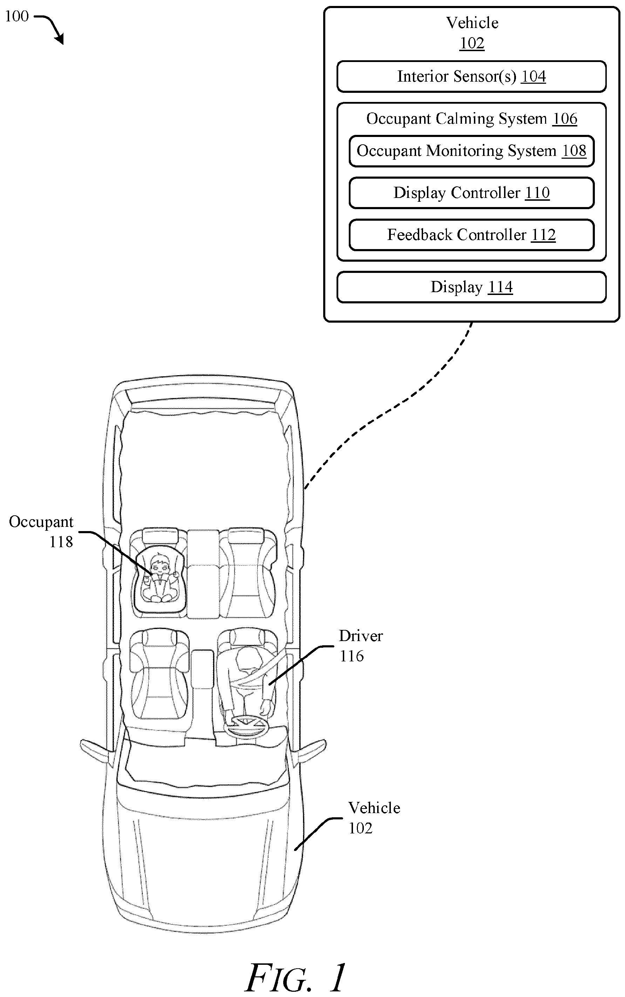

FIG. 1 illustrates an example environment 100 in which an in-vehicle occupant monitoring and calming system can be implemented. In the depicted environment 100, a vehicle 102 is driving along a roadway with a driver 116 and an occupant 118 (e.g., an infant) in a rear seat of the vehicle 102. The occupant 118 is illustrated in FIG. 1 as an infant. In other implementations, the occupant 118 can be a child, adult, pet, or another object. Although illustrated as an automobile, the vehicle 102 can represent other types of motorized vehicles (e.g., a passenger truck, a car, a motorcycle, a bus, a tractor, a semi-trailer truck), watercraft (e.g., a boat), or aircraft (e.g., an airplane).

The vehicle 102 includes one or more interior sensors 104, an occupant calming system 106, and a display 114. The interior sensors 104 are mounted to, or integrated within, an interior portion of the vehicle 102 to detect aspects of the occupant 118 and other passengers. The interior sensors 104 can include one or more cameras, microphones, radar sensors, ultrasonic sensors, and/or infrared cameras that monitor the occupant 118. In particular, the interior sensors 104 can be positioned to have a field of view that includes one or more occupants 118.

The occupant calming system 106 can include an occupant monitoring system 108, a display controller 110, and a feedback controller 112. Using data from one or more interior sensors 104, the occupant monitoring system 108 can monitor the occupant 118. In particular, the occupant monitoring system 108 can determine whether the occupant 118 is distressed or may soon become distressed. Although the term "distressed" is used in this description, it should be understood that the disclosed techniques and apparatuses can monitor for and address any forms of discomfort, stress, agitation, fussiness, sadness, or pain.

As described in greater detail below, the occupant monitoring system 108 can use camera data to track key body points of the occupant 118 and determine whether the occupant 118 is distressed or will soon become distressed (e.g., be awakened). The occupant monitoring system 108 can, for example, provide the camera data to a machine-learned model (e.g., a deep neural network) to recognize actions of the occupant 118 that indicate distress or potential distress soon. For example, the occupant monitoring system 108 can monitor camera data for certain facial expressions or strong or sudden arm or leg movements.

As another example, the occupant monitoring system 108 can use audio data from one or more microphones to monitor the occupant 118. A machine-learned model can be trained to recognize typical sounds associated with a baby or young child that is distressed or will soon be distressed. The occupant monitoring system 108 can also use the audio data to determine from which seat the distress sounds are coming. The occupant monitoring system 108 can also use thermographic camera data to monitor the body temperature of the occupant 118.

The display controller 110 can control data and user interface options provided to the driver 116 via the display 114. For example, the display controller 110 can process camera data to provide a cropped and/or enhanced image or video of the occupant 118 on the display 114. The image or video can be automatically provided to the driver in response to the occupant monitoring system 108 determining that the occupant 118 is distressed. The display controller 110 can also determine one or more user-selectable options to provide to the driver 116 via the display 114. For example, the display controller 110 can present one or more touchscreen buttons to the driver 116 to soothe or calm the occupant 118.

The feedback controller 112 can control feedback operations to calm or soothe the occupant 118. For example, the feedback controller 112 can adjust the interior lighting of the vehicle 102 by dimming or slightly illuminating the vehicle's interior. The feedback controller 112 can also adjust the color or hue of the interior lights to provide a more calming effect. Similarly, the feedback controller 112 can play music (e.g., white noise, nursery songs) to calm the occupant 118. The music can be loaded from the driver's smartphone, an infotainment system of the vehicle 102, or a remote computer system. The feedback controller 112 can also control vibration motors and/or other motors to provide a soothing motion or rocking sensation to the seat occupied by the occupant 118.

The display 114 provides the driver 116 with information regarding the occupant 118 and feedback control options. For example, the display 114 can be integrated into a center console or dashboard of the vehicle 102. As described above, the display 114 can provide an image or video of the occupant 118 when the occupant monitoring system 108 determines that the occupant 118 is distressed or may soon become distressed. The display 114 also provides options for the driver 116 to soothe the occupant 118 without having to remove their attention from the roadway. In this way, the driver 116 can be alerted to the occupant's distress and calm the occupant 118 without removing their attention from the operation of the vehicle 102.

### EXAMPLE VEHICLE CONFIGURATION

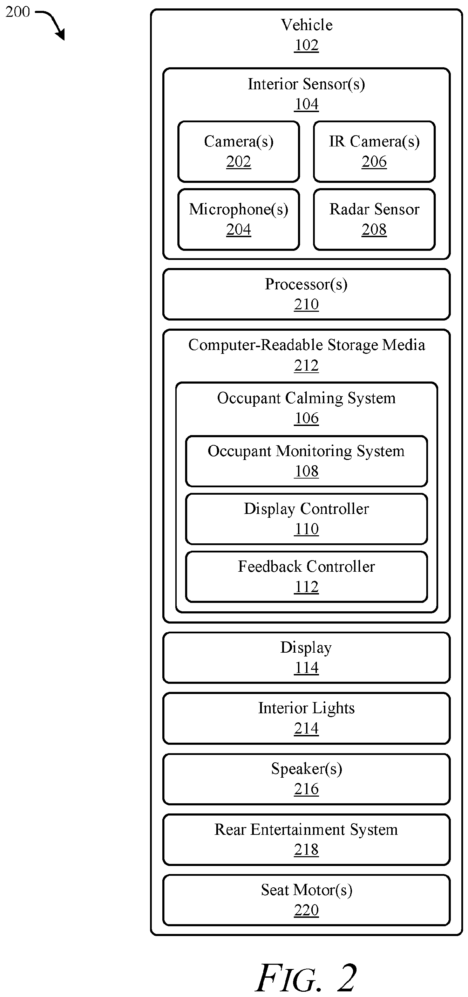

FIG. 2 illustrates an example configuration 200 of the vehicle 102 with the in-vehicle occupant monitoring and calming system. As described for FIG. 1, the vehicle includes the interior sensors 104, the occupant calming system 106, and the display 114. In addition, the vehicle 102 can include one or more processors 210, computer-readable storage media (CRM) 212, interior lights 214, one or more speakers 216, a rear entertainment system 218, and one or more seat motors 220.

The interior sensors 104 can include one or more cameras 202, microphones 204, infrared (IR) cameras 206, and radar sensors 208. The cameras 202 can capture an image or video of the vehicle cabin. For example, the cameras 202 can provide color images of the vehicle cabin to provide on the display 114. The IR cameras 206 can detect whether the occupant 118 is a living being. The IR cameras 206 can use an infrared light source (e.g., a vertical-cavity surface-emitting laser (VCSEL) or IR light-emitting diode (LED)) to provide lighting for interior sensing during low ambient light conditions. The IR cameras 206 can provide monochrome IR images that the occupant monitoring system 108 can process. The vehicle 102 can position the cameras 202 and the IR cameras 206 to have fields of view for regions of interest that correspond to the seating positions within the vehicle cabin. The vehicle 102 can include the cameras 202 (e.g., red-green-blue (RGB) cameras) and the IR cameras 206 capturing the same seating position(s). In other implementations, an RGB camera and IR camera can be integrated into a single camera device. The cameras 202 can also include three-dimensional time-of-flight cameras that measure the time for light pulses to leave the camera and reflect back on the camera's imaging array.

The microphones 204 can detect audio content in the vehicle 102, including sounds associated with an infant waking up or becoming agitated. The vehicle 102 can also include thermographic cameras or thermal cameras that detect a temperature of the occupant 118 based on a thermal image. The radar sensor 208 or another sensor (e.g., an ultrasonic sensor, a time-of-flight camera) can detect the heart rate of the occupant 118 by monitoring radio waves, including monitoring for an irregular heart rate of the occupant 118.

The processor 210 (e.g., an electronic control unit or control circuit) can be a microprocessor or a system-on-chip configured to perform the techniques described in this disclosure. The processor 210 can include one or more application-specific integrated circuits (ASICs), field-programmable gate arrays (FPGAs), or one or more general-purpose hardware processors programmed to perform the techniques described herein. The processor 210 can execute computer-executable instructions stored in the CRM 212. The CRM 212 can be a memory or storage media, including non-volatile memory, such as electrically erasable programmable read-only memory (EEPROM) for storing one or more computer-executable instructions, routines, thresholds, and captured data. The CRM 212 may include other examples of non-volatile memory, such as flash memory, read-only memory (ROM), programmable read-only memory (PROM), and erasable PROM (EPROM). The processor 210 or the CRM 212 may also include volatile memory (e.g., dynamic random-access memory (DRAM), static random-access memory (SRAM)).

The processor 210 processes sensor data from the interior sensors 104 and determine whether the occupant 118 is distressed or about to become distressed. In response to driver input, the processors 210 control the operation of the interior lights 214, the speakers 216, the rear entertainment system 218, and/or the seat motors 220 to calm the occupant 118.

The occupant calming system 106 can be stored in the CRM 212. As described for FIG. 1, the occupant calming system 106 can include the occupant monitoring system 108, the display controller 110, and the feedback controller 112. The occupant monitoring system 108 can use data from the interior sensors 104 to determine that the occupant 118 is distressed or about to become distressed. For example, the occupant monitoring system 108 can use video data from the cameras 202 or the IR cameras 206 to recognize facial expressions associated with agitation or potential agitation of the occupant 118. Similarly, the position of key body points (e.g., arms, shoulders, hips, legs, feet) can be tracked to recognize distress or potential distress of the occupant 118. In some implementations, the occupant monitoring system 108 can use a machine-learned model (e.g., a deep neural network) to process data from the cameras 202 or the IR cameras 206 and recognize the distress or potential distress of the occupant 118. The occupant monitoring system 108 can, for example, use a configurable threshold (e.g., seventy-five percent) that the occupant 118 will become distressed in the next few minutes before making a determination that the occupant 118 is distressed.

The occupant monitoring system 108 can similarly use data from the microphones 204, the IR cameras 206, and the radar sensors 208 to determine occupant distress. The audio data from the microphones 204 can be used to monitor for sounds associated with a fussy child or a child about to become fussy. The thermographic camera data can indicate raising body temperatures or irregular body temperatures. Likewise, the occupant monitoring system 108 can identify irregular or raised heart rates or breathing that indicate occupant distress. Like the camera data, the occupant monitoring system 108 can use a machine-learned model to analyze the data from the microphones 204, the IR cameras 206, the radar sensors 208, and/or other sensors to detect occupant distress.

In response to the occupant monitoring system 108 determining that the occupant 118 is distressed or about to become distressed, the display controller 110 controls the display 114 to provide an image or video of the occupant 118 to the driver 116 The display controller 110 can also control the interior lights 214 to improve the visibility of the occupant 118 in the captured image or video. For example, the display controller 110 can slowly or partially illuminate the interior lights above or near the occupant 118 to improve the clarity of the captured image or video. The interior lights 214 can include cabin lighting in the ceiling, door panels, or other areas of the vehicle 102. The display controller 110 also provides selectable options for the driver 116 to calm the occupant 118. The selectable options can include changing the interior lighting, playing music, playing a video, or rocking the occupant's seat. The driver 116 can select a particular option via a touchscreen of the display 114, audio input, a button near the display 114, or similar input means.

In response to the driver 116 selecting one of the selectable options, the feedback controller 112 performs certain functions to try to calm the occupant 118. For example, the feedback controller 112 can control the interior lights 214 to dim or brighten the ambient lighting. The feedback controller 112 can also control a central entertainment system or the rear entertainment system 218 to play music or multimedia files. The rear entertainment system 218 can include the speakers 216 and/or a display dedicated to the occupant's seat or the rear portion of the vehicle 102. The music can include white noise, ocean noises, nursery songs, or any other audio file. The multimedia files can include a movie, content from a streaming service, a live video of the driver 116, or any other video data.

The feedback controller 112 can also control the seat motors 220 (e.g., actuators) in the occupant's seat to try to calm the occupant 118. The seat motors 220 can be integrated into the bottom and/or backrest of the seat. The feedback controller 112 can activate the seat motors 220 to mimic a rocking movement, vibrations, or other soothing motions to calm the occupant 118.

### EXAMPLE FLOW DIAGRAM

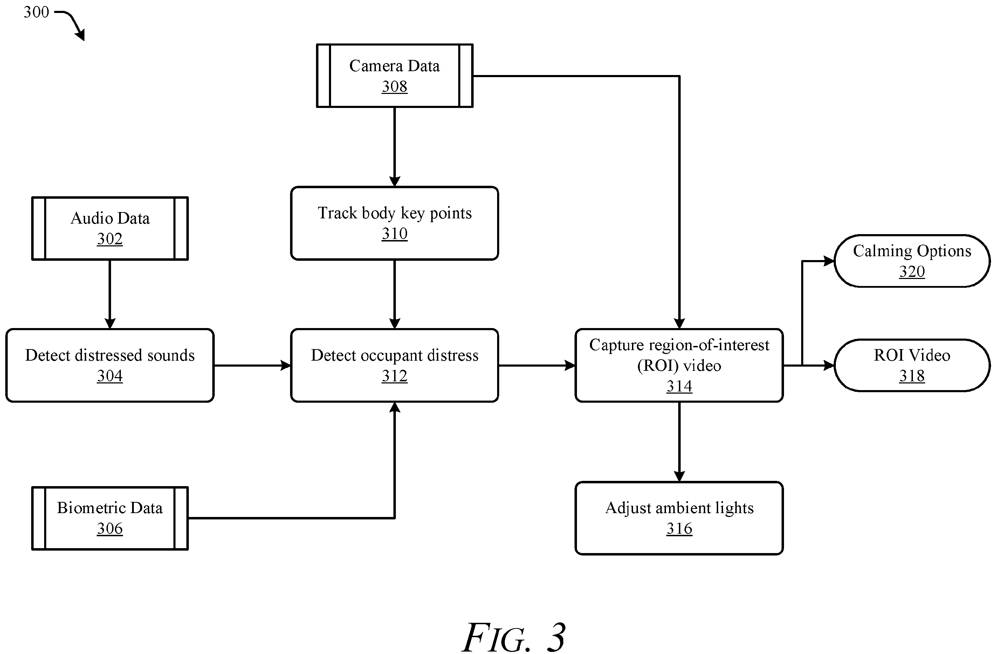

FIG. 3 illustrates an example conceptual diagram 300 for performing in-vehicle occupant monitoring and calming. The conceptual diagram 300 illustrates example inputs, outputs, and operations of the occupant calming system 106, but the occupant calming system 106 is not necessarily limited to the order or combinations in which the inputs, outputs, and operations are shown herein. Further, any of one or more of the operations (or acts) may be repeated, combined, or reorganized to provide other functionality. For example, some or all the operations may be repeated and/or combined for each occupant of a vehicle.

At 304, the occupant monitoring system 108 obtains audio data 302 from the microphones 204 in the vehicle 102. The occupant monitoring system 108 or a machine-learned model (e.g., a deep neural network) thereof can use the audio data 302 to detect sounds associated with the occupant 118 becoming or being distressed. For example, the occupant monitoring system 108 can determine that a child is awakening from a change in their breathing, soft or intermittent crying sounds, or similar sounds. The distress sounds can also include soft speaking or statements directed to the driver (e.g., "mom") from a toddler or young child. The occupant monitoring system 108 can also utilize the audio data 302 to determine from which seat the distress sounds are coming. In response to detecting distressed sounds, the occupant monitoring system 108 can forward the audio data 302 or the distress sounds to another machine-learned model or component thereof.

At 310, the occupant monitoring system 108 obtains camera data 308 (e.g., images or video) from the cameras 202 in the vehicle 102. The occupant monitoring system 108 or a machine-learned model thereof can use the camera data 308 to track key body points of the occupant 118. The key body points can include arms, shoulders, hips, head, eyes, or other body locations. For example, the occupant monitoring system 108 can analyze the camera data 308 to determine if the occupant 118 has extensive or strong body movements that indicate distress.

At 312, the occupant monitoring system 108 obtains the audio data 302 or the distress sounds identified in operation 304, along with the tracking of key body points and biometric data 306. The biometric data 306 can include the body temperature of the occupant 118 from a thermographic camera or heart rate data from the radar sensor 208 or a time-of-flight camera.

The occupant monitoring system 108 or a machine-learned model can fuse the input data (or a subset thereof) and analyze it to detect whether the occupant 118 is distressed or becoming distressed. For example, the machine-learned model can be trained to associate certain movements of one or more key body points with the occupant 118 becoming or being distressed. Certain facial expressions or rapid arm or leg movements can be associated with distress or rising distress. Similarly, the biometric data 306 can be used to identify or complement a determination that the occupant 118 is distressed. For example, changes in heart rate or body temperature can be monitored to improve the occupant monitoring. To reduce false detections, the occupant monitoring system 108 or the machine-learned model can determine a probability that the occupant 118 is distressed or about to become distressed and compare the probability to a configurable threshold (e.g., seventy-five percent) before determining that the occupant 118 is distressed. The occupant monitoring system 108 or the machine-learned model can also use the input data to locate the occupant 118 in the vehicle 102.

The input data to operation 312, including the audio data 302, the biometric data 306, and the camera data 308, can be periodically updated by the occupant monitoring system 108 to ensure accurate and timely determinations of occupant distress. For example, the occupant monitoring system 108 can update the input data at fifteen-second intervals to account for temporary changes in occupant distress.

At 314, the occupant monitoring system 108 or the display controller 110 captures video with a region of interest (ROI) associated with the seat in which the occupant 118 is located. In particular, the display controller 110 can crop the camera data 308 to focus on the distressed occupant. For example, the audio data 302 can be used to determine the region of interest and which occupant has become distressed to assist with the cropping. In this way, the irrelevant background is removed from an ROI video 318 displayed to the driver 116.

At 316, the display controller 110 can also adjust the interior lights 214 in the vehicle 102 to improve the clarity of the video by improving the image exposure. The display controller 110 can also perform other image processing (e.g., enhancement, contrast adjustment) to improve the ROI video 318 of the occupant 118.

The display controller 110 can then output the ROI video 318 to the display 114. For example, the ROI video 318 can be shown on a center console display. The display controller 110 also causes one or more calming options 320 to be displayed with the ROI video 318 on the display 114. The calming options 320 are driver-selectable user input (UI) options that the feedback controller 112 can cause to be performed to try to calm the occupant 118. For example, the calming options 320 can include playing an audio or multimedia file for the occupant 118 using the speakers 216 and/or the rear entertainment system 218. The audio or multimedia file can be obtained from a local memory in the vehicle, a remote computer system (e.g., an online music service), or the driver's smartphone or another electronic device (e.g., a music app installed into an entertainment system of the vehicle 102). The audio file can be nursery music, white noise, or a favorite song of the occupant. The multimedia file can be a movie, television show episode, or other multimedia content.

The calming options 320 can also include displaying a live video of the driver's face to the rear entertainment system 218 so the driver can talk, sing, or otherwise calm the occupant 118. The calming options 320 can also include adjusting the ambient lighting by adjusting the interior lights 214 or raising or lowering automatic sunshades for the rear windows of the vehicle 102. Further, the calming options 320 can include applying a soothing motion pattern to the seat occupied by the occupant 118. For example, the feedback controller 112 can activate actuators or motors in or attached to the seat to induce a rocking or vibration sensation to the occupant 118. Similarly, the feedback controller 112 can activate motors to move the seat forward and backward to gently rock the occupant 118.

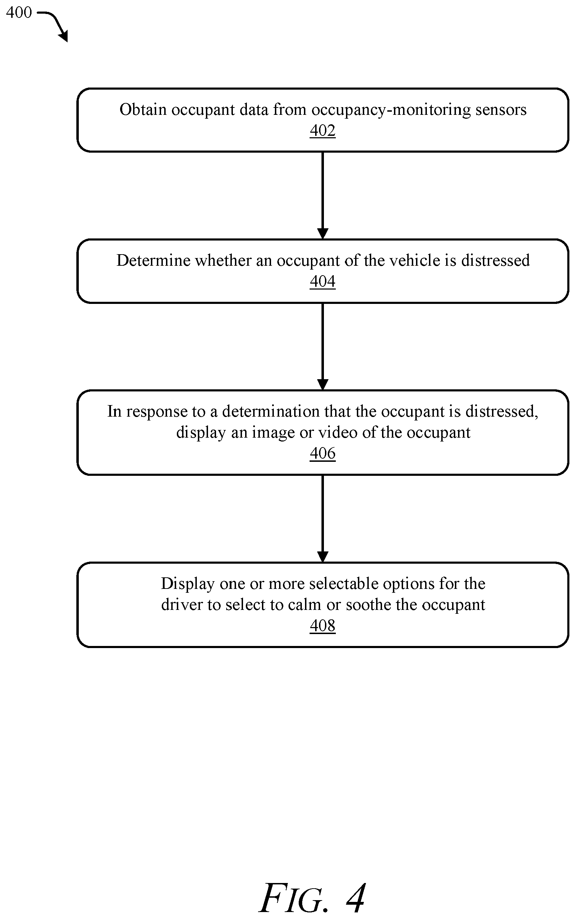

FIG. 4 illustrates an example method 400 of in-vehicle monitoring and calming. Method 400 is shown as sets of operations (or acts) performed, but not necessarily limited to the order or combinations in which the operations are shown herein. Further, any of one or more of the operations may be repeated, combined, or reorganized to provide other methods. In portions of the following discussion, reference may be made to the environment 100 of FIG. 1, and entities detailed in FIGs. 1 through 3, reference to which is made for example only. The techniques are not limited to performance by one entity or multiple entities.

At 402, occupant data from one or more occupancy-monitoring sensors of a vehicle is obtained. For example, the occupant monitoring system 108 can obtain the audio data 302 from the microphones 204, the camera data 308 from the cameras 202 or the IR cameras 206, or the biometric data 306. The vehicle 102 can include additional interior sensors 104 to obtain occupant data for the rear passengers.

The occupant data can include the audio data 302 from the rear seat(s) of the vehicle or the camera data 308 of the rear seat(s) of the vehicle. The biometric data 306 can be obtained from the IR cameras 206, radar sensor 208, a thermographic camera, an ultrasonic sensor, or a time-of-flight camera. The biometric data 306 can include a body temperature, a breathing pattern, or the heart rate of the occupant 118.

At 404, it is determined whether an occupant of the vehicle is distressed based on the occupant data. The occupant is seated in a rear seat of the vehicle and can be an infant, toddler, or young child. For example, the occupant monitoring system 108 can determine whether the occupant 118 is distressed based on the occupant data. The occupant monitoring system 108 can provide the occupant data as an input to a machine-learned model. The machine-learned model can then determine whether changes in the occupant data are associated with distress. For example, the distress determination can be based on the audio data 302 and whether sounds or changes in breathing from the occupant are associated with distress. It can also include tracking, using the camera data 308, positions of one or more key body points of the occupant 118, and determining changes in the positions of the key body points are above a movement threshold. The key body points can include the head, shoulders, eyes, arms, shoulders, legs, or hips of the occupant 118. Similarly, the distress determination can be based on whether changes in the biometric data 306 associated with the occupant 118 are associated with distress.

The machine-learned model can also track changes in the occupant data and determine a probability that the occupant is distressed based on those changes or a current data cycle of occupant data. The distress probability can then be compared to a distress threshold, which can be a configurable confidence value. The machine-learned model can determine that the occupant 118 is distressed based on a determination that the distress probability is greater than the distress threshold.

At 406, in response to determining that the occupant is distressed, an image or video of the occupant is displayed on a display located in a field of view of a driver of the vehicle. For example, the display controller 110 can display the ROI video 318 on the display 114 in response to a determination by the occupant monitoring system 108 that the occupant 118 is distressed. The display controller 110 can apply a processing action to the ROI video 318 before displaying it to improve its clarity. For example, the processing action can include cropping the ROI video 318 to focus on the occupant 118, adjusting the brightness or contrast of the ROI video 318, and/or adjusting the ambient lighting of the vehicle 102.

At 408, one or more selectable options for the driver to select are displayed on the display to calm or soothe the occupant. The display controller 110 provides selectable calming options 320 on the display 114 for calming the occupant 118. The calming options 320 can include playing an audio or multimedia file on the rear entertainment system 218 of the vehicle. Similarly, the calming options 320 can also include displaying an image or video of the driver 116 to the occupant via the rear entertainment system 218. The driver 116 can also be given the option to adjust the ambient lighting of the vehicle 102 by dimming or brightening the interior lights of the vehicle or raising or lowering sunshades of the vehicle 102. The calming options 320 can further include activating actuators or motors in or attached to the rear seat to introduce a vibration or motion pattern to the occupant 118. Similarly, the feedback controller 112 can activate motors in or attached to the rear seat to move the rear seat forward and backward to introduce a rocking motion.

### EXAMPLE DISPLAY

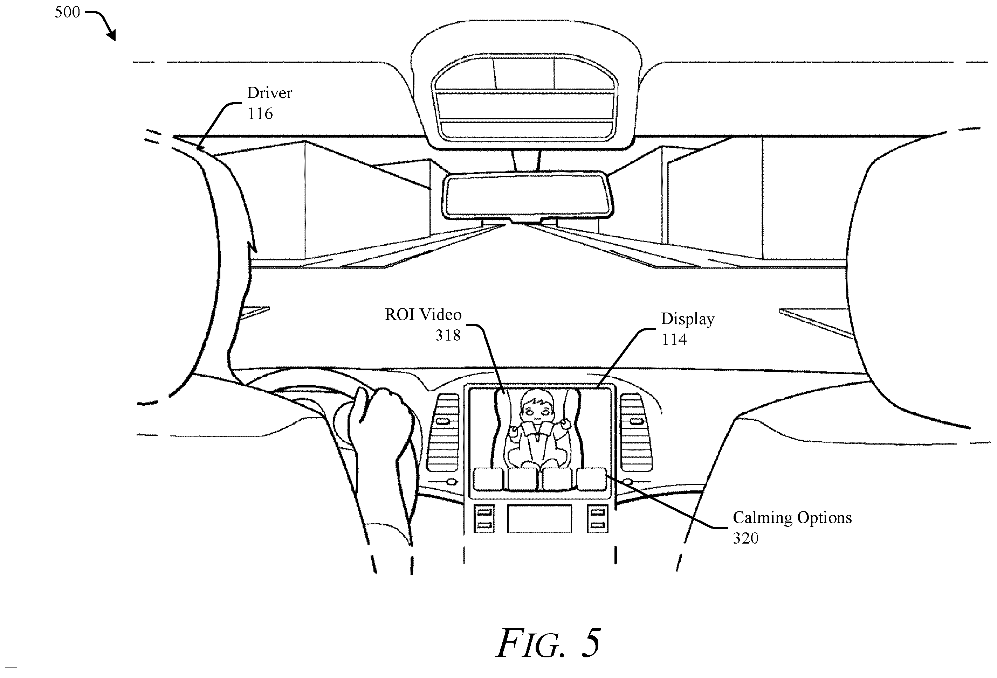

FIG. 5 illustrates an example of a display of an in-vehicle monitoring and calming system in accordance with techniques of this disclosure. In illustrated environment 500, the driver 116 is driving the vehicle 102 along a roadway and the occupant 118 is in a rear seat of the vehicle 102. The occupant 118 in the illustrated environment 500 is an infant in a car seat. The vehicle 102 includes the display 114 as part of a center console in or near the dashboard. In other implementations, the display 114 can be in another portion of the field of view of the driver 116.

As described with respect to FIGs. 3 and 4, the occupant calming system 106 can monitor the occupant 118 and determine whether the occupant 118 is or may soon become distressed. For example, the occupant monitoring system 108 can determine that the occupant 118 may soon awaken based on a change in the infant's breathing, facial expressions, or rapid body movements. Similarly, the occupant monitoring system 108 can monitor sounds or biometric data associated with the infant indicating that they are becoming distressed. In response to determining that the occupant 118 is distressed, the display controller 110 can display the ROI video 318 on the display 114. The ROI video 318 provides a real-time video feed of the occupant 118 to the driver 116. As described above, the display controller 110 can crop the camera data 308 to focus the ROI video 318 on the distressed occupant 118. Similarly, the display controller 110 can enhance the brightness or contrast of the camera data 308 to improve the clarity of the ROI video 318 for the driver 116. In this way, the occupant calming system 106 can alert the driver 116 of a distressed occupant (e.g., potentially before the driver 116 becomes aware) and display a real-time video of the occupant 118 on the display 114 without requiring the driver 116 to request the video and reducing the driver's distraction.

The display controller 110 also displays one or more calming options 320 on the display 114. In the illustrated environment 500, four calming options 320 are presented to the driver 116. In other implementations, fewer or additional calming options 320 can be presented. The types of calming options 320 are described with respect to FIGs. 3 and 4. In addition, the calming options 320 can be selected based on the driver's preferences, the current environment within the vehicle 102 (e.g., music is currently playing, night-time driving), or most recent selections by the driver 116.

In response to the driver 116 selecting one or more of the calming options 320, the feedback controller 112 can perform the calming action associated with the selected calming option 320. For example, the feedback controller 112 can cause a real-time video of the driver 116 to be displayed on the rear entertainment system 218 of the vehicle 102 so the occupant 118 can see the driver's face. As another example, the feedback controller 112 can cause a particular multimedia file to be played on the speakers 216 or the rear entertainment system 218. In this way, the occupant calming system 106 can assist the driver 116 in monitoring and calming the distress of the occupant 118 with minimal distraction from operation of the vehicle 102.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A method comprising:
obtaining (402) occupant data from one or more occupancy-monitoring sensors (104) of a vehicle (102);
determining (404), based on the occupant data, whether an occupant (118) of the vehicle (102) is distressed, the occupant being seated in a rear seat of the vehicle (102);
in response to determining that the occupant is distressed, displaying (406), on a display (114) located in a field of view of a driver (116) of the vehicle (102), an image or video (318) of the occupant (118); and
displaying (408), on the display (114), one or more selectable options (320) for the driver to select to calm or soothe the occupant (118), wherein the one or more selectable options comprise:
playing an audio file in the vehicle (102);
playing a multimedia file on a rear entertainment system of the vehicle (102);
displaying an image or video of the driver (116) to the occupant (118) via the rear entertainment system;
adjusting ambient lighting of the vehicle (102) by dimming or brightening interior lights of the vehicle (102);
raising or lowering sunshades of the vehicle (102);
activating actuators or motors in or attached to the rear seat to introduce a vibration or motion pattern; or
activating additional motors in or attached to the rear seat to move the rear seat forward and backward to introduce a rocking motion.

2. The method of claim 1, wherein:
the one or more occupancy-monitoring sensors (104) comprise one or more microphones; and
the occupant data comprise audio data from the rear seat of the vehicle (102).

3. The method of claim 2, wherein determining whether the occupant (118) is distressed comprises determining, based on the audio data, whether sounds or changes in breathing from the occupant (118) are associated with distress.

4. The method of any one of the preceding claims, wherein:
the one or more occupancy-monitoring sensors comprise one or more cameras (202, 206); and
the occupant data comprise camera data of the rear seat of the vehicle (102).

5. The method of claim 4, wherein:
the method further comprises tracking, using the camera data, positions of one or more key body points of the occupant (118); and
determining whether the occupant (118) is distressed comprises determining whether changes in the positions of the one or more of the key body points are above a movement threshold.

6. The method of claim 5, wherein the key body points include at least one of a head, shoulders, eyes, arms, legs, or hips of the occupant.

7. The method of any one of the preceding claims, wherein:
the one or more occupancy-monitoring sensors comprise at least one of an infrared camera (206), a radar sensor (208), a time-of-flight camera, a thermographic camera, or an ultrasonic sensor;
the occupant data comprise biometric data (306) associated with the occupant (118), the biometric data including at least one of a body temperature, a breathing pattern, or a heart rate of the occupant (118); and
determining whether the occupant (118) is distressed comprises determining, based on the biometric data (306) obtained from the one or more occupancy-monitoring sensors, whether changes in the biometric data associated with the occupant (118) are associated with distress.

8. The method of any one of the preceding claims, wherein determining whether the occupant (118) is distressed comprises:
providing the occupant data as an input to a machine-learned model, the occupant data comprising at least one of camera data, audio data, or biometric data associated with the occupant (118); and
determining, by the machine-learned model, whether changes in the occupant data are associated with distress.

9. The method of claim 8, wherein determining whether the changes in the occupant data are associated with distress comprises:
determining, based on the changes in the occupant data and using the machine-learned model, a probability that the occupant (118) is distressed; and
determining whether the probability that the occupant (118) is distressed is greater than a distress threshold, the distress threshold being a configurable confidence value.

10. The method of any one of the preceding claims, the method further comprises:
before displaying the image or video of the occupant (118), applying a processing action to the image or video of the occupant (118), the processing action comprising at least one of:
cropping the image or video to focus on the occupant (118);
adjusting a brightness or contrast of the image or video; or
adjusting ambient lighting of the vehicle (102).

11. The method of any one of the preceding claims, wherein the occupant (118) comprises an infant, a toddler, or a young child.

12. A system, comprising one or more occupancy-monitoring sensors (104), a display (114) and a processor (210) configured to perform the method of claim 1, the system further comprising at least one of
a rear entertainment system (218) with speakers (216) and/or a display,
a dimmer,
a feedback controller (112) configured to control interior lights (214) of a vehicle, automatic sunshades,
actuators or motors configured to introduce a vibration or motion pattern to a rear seat of the vehicle, or
motors configured to move the rear seat forward and backward to introduce a rocking motion.

13. A non-transitory computer-readable media that stores computer-executable instructions that, when executed by the processor (210) of claim 12, cause the processor (210) to perform the method of claim 1.

## Patentansprüche

1. Verfahren, umfassend:
Erhalten (402) von Insassendaten von einem oder mehreren Insassenüberwachungssensoren (104) eines Fahrzeugs (102);
Bestimmen (404), basierend auf den Insassendaten, ob ein Insasse (118) des Fahrzeugs (102) in einer Notlage ist, wobei der Insasse auf einem Rücksitz des Fahrzeugs (102) sitzt;
als Reaktion auf das Bestimmen, dass der Insasse in einer Notlage ist, Anzeigen (406), auf einer Anzeige (114), die sich in einem Sichtfeld eines Fahrers (116) des Fahrzeugs (102) befindet, eines Bildes oder Videos (318) des Insassen (118); und
Anzeigen (408), auf der Anzeige (114), einer oder mehrerer auswählbarer Optionen (320) für den Fahrer, um auszuwählen, den Insassen (118) zu beruhigen oder zu besänftigen, wobei die eine oder die mehreren auswählbaren Optionen umfassen:
Abspielen einer Audiodatei in dem Fahrzeug (102);
Abspielen einer Multimediadatei auf einem rückwärtigen Unterhaltungssystem des Fahrzeugs (102);
Anzeigen eines Bildes oder Videos des Fahrers (116) für den Insassen (118) über das rückwärtige Unterhaltungssystem;
Anpassen der Umgebungsbeleuchtung des Fahrzeugs (102) durch Dimmen oder Aufhellen von Innenleuchten des Fahrzeugs (102);
Anheben oder Absenken von Sonnenblenden des Fahrzeugs (102);
Aktivieren von Aktoren oder Motoren in oder an dem Rücksitz befestigt, um ein Vibrations- oder Bewegungsmuster einzuführen; oder
Aktivieren von zusätzlichen Motoren in oder an dem Rücksitz befestigt, um den Rücksitz vorwärts und rückwärts zu bewegen, um eine Schaukelbewegung einzuführen.

2. Verfahren nach Anspruch 1, wobei:
der eine oder die mehreren Insassenüberwachungssensoren (104) ein oder mehrere Mikrofone umfassen; und
die Insassendaten Audiodaten von dem Rücksitz des Fahrzeugs (102) umfassen.

3. Verfahren nach Anspruch 2, wobei das Bestimmen, ob der Insasse (118) in einer Notlage ist, das Bestimmen, basierend auf den Audiodaten, umfasst, ob Geräusche oder Änderungen der Atmung des Insassen (118) einer Notlage zugeordnet sind.

4. Verfahren nach einem der vorhergehenden Ansprüche, wobei:
der eine oder die mehreren Insassenüberwachungssensoren eine oder mehrere Kameras (202, 206) umfassen; und
die Insassendaten Kameradaten des Rücksitzes des Fahrzeugs (102) umfassen.

5. Verfahren nach Anspruch 4, wobei:
das Verfahren ferner das Verfolgen, unter Verwendung der Kameradaten, von Positionen eines oder mehrerer Schlüsselkörperpunkte des Insassen (118) umfasst; und
das Bestimmen, ob der Insasse (118) in einer Notlage ist, das Bestimmen umfasst, ob Änderungen der Positionen des einen oder der mehreren Schlüsselkörperpunkte über einem Bewegungsschwellenwert liegen.

6. Verfahren nach Anspruch 5, wobei die Schlüsselkörperpunkte mindestens eines von einem Kopf, Schultern, Augen, Armen, Beinen oder Hüften des Insassen umfassen.

7. Verfahren nach einem der vorhergehenden Ansprüche, wobei:
der eine oder die mehreren Insassenüberwachungssensoren mindestens eines von einer Infrarotkamera (206), einem Radarsensor (208), einer Laufzeitkamera, einer Wärmebildkamera oder einem Ultraschallsensor umfassen;
die Insassendaten biometrische Daten (306) umfassen, die dem Insassen (118) zugeordnet sind, wobei die biometrischen Daten mindestens eines von einer Körpertemperatur, einem Atmungsmuster oder einer Herzfrequenz des Insassen (118) umfassen; und
das Bestimmen, ob der Insasse (118) in einer Notlage ist, das Bestimmen, basierend auf den biometrischen Daten (306), die von dem einen oder den mehreren Insassenüberwachungssensoren erhalten werden, umfasst, ob Änderungen der biometrischen Daten, die dem Insassen (118) zugeordnet sind, einer Notlage zugeordnet sind.

8. Verfahren nach einem der vorhergehenden Ansprüche, wobei das Bestimmen, ob der Insasse (118) in einer Notlage ist, Folgendes umfasst:
Bereitstellen der Insassendaten als eine Eingabe in ein maschinell erlerntes Modell, wobei die Insassendaten mindestens eines von Kameradaten, Audiodaten oder biometrischen Daten, die dem Insassen (118) zugeordnet sind, umfassen; und
Bestimmen, durch das maschinell erlernte Modell, ob Änderungen der Insassendaten einer Notlage zugeordnet sind.

9. Verfahren nach Anspruch 8, wobei das Bestimmen, ob die Änderungen der Insassendaten einer Notlage zugeordnet sind, Folgendes umfasst:
Bestimmen, basierend auf den Änderungen der Insassendaten und unter Verwendung des maschinell erlernten Modells, einer Wahrscheinlichkeit, dass der Insasse (118) in einer Notlage ist; und
Bestimmen, ob die Wahrscheinlichkeit, dass der Insasse (118) in einer Notlage ist, größer als ein Notlagenschwellenwert ist, wobei der Notlagenschwellenwert ein konfigurierbarer Vertrauenswert ist.

10. Verfahren nach einem der vorhergehenden Ansprüche, wobei das Verfahren ferner Folgendes umfasst:
vor dem Anzeigen des Bildes oder Videos des Insassen (118), Anwenden einer Verarbeitungsaktion auf das Bild oder Video des Insassen (118), wobei die Verarbeitungsaktion mindestens eines von Folgendem umfasst:
Beschneiden des Bildes oder Videos, um sich auf den Insassen (118) zu fokussieren;
Anpassen einer Helligkeit oder eines Kontrasts des Bildes oder Videos; oder
Anpassen der Umgebungsbeleuchtung des Fahrzeugs (102).

11. Verfahren nach einem der vorhergehenden Ansprüche, wobei der Insasse (118) ein Baby, einen Säugling oder ein Kleinkind umfasst.

12. System, umfassend einen oder mehrere Insassenüberwachungssensoren (104), eine Anzeige (114) und einen Prozessor (210), der konfiguriert ist, um das Verfahren nach Anspruch 1 durchzuführen, wobei das System ferner mindestens eines von Folgendem umfasst:
ein rückwärtiges Unterhaltungssystem (218) mit Lautsprechern (216) und/oder einer Anzeige,
einen Dimmer,
eine Rückkopplungssteuerung (112), die konfiguriert ist, um Innenleuchten (214) eines Fahrzeugs zu steuern,
automatische Sonnenblenden,
Aktoren oder Motoren, die konfiguriert sind, um ein Vibrations- oder Bewegungsmuster in einen Rücksitz des Fahrzeugs einzuführen,
oder
Motoren, die konfiguriert sind, um den Rücksitz vorwärts und rückwärts zu bewegen, um eine Schaukelbewegung einzuführen.

13. Nichtflüchtiges computerlesbares Medium, das computerausführbare Anweisungen speichert, die, wenn sie von dem Prozessor (210) nach Anspruch 12 ausgeführt werden, den Prozessor (210) veranlassen, das Verfahren nach Anspruch 1 durchzuführen.

## Revendications

1. Procédé consistant à :
obtenir (402) des données d'occupant à partir d'un ou plusieurs capteurs de surveillance d'occupation (104) d'un véhicule (102) ;
déterminer (404), sur la base des données d'occupant, si un occupant (118) du véhicule (102) est en détresse, l'occupant étant assis sur un siège arrière du véhicule (102) ;
en réponse à la détermination que l'occupant est en détresse, afficher (406), sur un écran (114) situé dans le champ de vision d'un conducteur (116) du véhicule (102), une image ou une vidéo (318) de l'occupant (118) ; et
afficher (408), sur l'écran (114), une ou plusieurs options sélectionnables (320) que le conducteur peut choisir pour calmer ou apaiser l'occupant (118), lesdites une ou plusieurs options sélectionnables comprenant :
la lecture d'un fichier audio dans le véhicule (102) ;
la lecture d'un fichier multimédia sur un système de divertissement arrière du véhicule (102) ;
l'affichage d'une image ou d'une vidéo du conducteur (116) à l'occupant (118) via le système de divertissement arrière ;
le réglage de l'éclairage ambiant du véhicule (102) en atténuant ou en augmentant la luminosité de l'éclairage intérieur du véhicule (102) ;
le relèvement ou l'abaissement de pare-soleil du véhicule (102) ;
l'activation d'actionneurs ou de moteurs dans ou fixés au siège arrière afin d'introduire un motif de vibration ou de mouvement ; ou
l'activation de moteurs supplémentaires dans ou fixés au siège arrière pour déplacer le siège arrière vers l'avant et vers l'arrière afin d'introduire un mouvement de balancement.

2. Procédé selon la revendication 1, dans lequel :
lesdits un ou plusieurs capteurs de surveillance d'occupation (104) comprennent un ou plusieurs microphones ; et
les données d'occupant comprennent des données audio provenant du siège arrière du véhicule (102).

3. Procédé selon la revendication 2, dans lequel déterminer si l'occupant (118) est en détresse comprend le fait de déterminer, sur la base des données audio, si des sons ou des changements de respiration de l'occupant (118) sont associés à une détresse.

4. Procédé selon l'une quelconque des revendications précédentes, dans lequel :
lesdits un ou plusieurs capteurs de surveillance d'occupation comprennent une ou plusieurs caméras (202, 206) ; et
les données d'occupant comprennent des données de caméra du siège arrière du véhicule (102).

5. Procédé selon la revendication 4, dans lequel :
le procédé consiste en outre à suivre, à l'aide des données de caméra, les positions d'un ou plusieurs points clés du corps de l'occupant (118) ; et
déterminer si l'occupant (118) est en détresse comprend le fait de déterminer si des changements des positions desdits un ou plusieurs points clés du corps sont supérieurs à un seuil de mouvement.

6. Procédé selon la revendication 5, dans lequel les points clés du corps incluent au moins l'un des points suivants : la tête, les épaules, les yeux, les bras, les jambes ou les hanches de l'occupant.

7. Procédé selon l'une quelconque des revendications précédentes, dans lequel :
lesdits un ou plusieurs capteurs de surveillance d'occupation comprennent au moins l'un des capteurs suivants : une caméra infrarouge (206), un capteur radar (208), une caméra à temps de vol, une caméra thermographique ou un capteur à ultrasons ;
les données d'occupant comprennent des données biométriques (306) associées à l'occupant (118), les données biométriques incluant au moins l'une des données suivantes : la température corporelle, le rythme respiratoire ou la fréquence cardiaque de l'occupant (118) ; et
déterminer si l'occupant (118) est en détresse comprend le fait de déterminer, sur la base des données biométriques (306) obtenues à partir desdits un ou plusieurs capteurs de surveillance d'occupation, si des changements dans les données biométriques associées à l'occupant (118) sont associés à une détresse.

8. Procédé selon l'une quelconque des revendications précédentes, dans lequel déterminer si l'occupant (118) est en détresse comprend le fait de :
fournir les données d'occupant en tant qu'entrée à un modèle appris par machine, les données d'occupant comprenant au moins l'une des données suivantes : données de caméra, données audio ou données biométriques associées à l'occupant (118) ; et
déterminer, par le modèle appris par machine, si des changements dans les données d'occupant sont associés à une détresse.

9. Procédé selon la revendication 8, dans lequel déterminer si les changements dans les données d'occupant sont associés à une détresse comprend le fait de :
déterminer, sur la base des changements dans les données d'occupant et à l'aide du modèle appris par machine, une probabilité que l'occupant (118) soit en détresse ; et
déterminer si la probabilité que l'occupant (118) soit en détresse est supérieure à un seuil de détresse, le seuil de détresse étant une valeur de confiance configurable.

10. Procédé selon l'une quelconque des revendications précédentes, le procédé consistant en outre à :
avant d'afficher l'image ou la vidéo de l'occupant (118), appliquer une action de traitement à l'image ou à la vidéo de l'occupant (118), l'action de traitement comprenant au moins l'une des actions suivantes :
recadrer l'image ou la vidéo pour focaliser sur l'occupant (118) ;
régler la luminosité ou le contraste de l'image ou de la vidéo ; ou
régler l'éclairage ambiant du véhicule (102).

11. Procédé selon l'une quelconque des revendications précédentes, dans lequel l'occupant (118) comprend un nourrisson, un enfant en bas âge ou un jeune enfant.

12. Système comprenant un ou plusieurs capteurs de surveillance d'occupation (104), un écran (114) et un processeur (210) configuré pour mettre en œuvre le procédé selon la revendication 1, le système comprenant en outre au moins l'un éléments des suivants :
un système de divertissement arrière (218) avec des haut-parleurs (216) et/ou un écran,
un variateur de luminosité,
un dispositif de commande à rétroaction (112) configuré pour commander l'éclairage intérieur (214) d'un véhicule,
des pare-soleil automatiques,
des actionneurs ou des moteurs configurés pour introduire un motif de vibration ou de mouvement dans un siège arrière du véhicule ou
des moteurs configurés pour déplacer le siège arrière vers l'avant et vers l'arrière afin d'introduire un mouvement de balancement.

13. Support informatique non transitoire lisible par ordinateur qui stocke des instructions exécutables par ordinateur qui, lorsqu'elles sont exécutées par le processeur (210) de la revendication 12, amènent le processeur (210) à mettre en œuvre le procédé selon la revendication 1.
